Europäisches Patentamt

**European Patent Office**

Office européen des brevets

(19)

(11) Publication number: **0 095 129**
**B1**

(12) **EUROPEAN PATENT SPECIFICATION**

(45) Date of publication of patent specification: **20.08.86**

(51) Int. Cl.⁴: **C 04 B 35/58,** B 23 B 27/14,
C 04 B 41/87

(21) Application number: **83104854.1**

(22) Date of filing: **17.05.83**

(54) Composite ceramic cutting tool and process for making same.

(30) Priority: **20.05.82 US 380364**
**20.05.82 US 380361**

(43) Date of publication of application:
**30.11.83 Bulletin 83/48**

(45) Publication of the grant of the patent:
**20.08.86 Bulletin 86/34**

(84) Designated Contracting States:
**BE DE FR GB SE**

(56) References cited:
**EP-A-0 035 777**
**FR-A-2 359 097**
**FR-A-2 383 896**
**US-A-4 252 768**

**CHEMICAL ABSTRACTS, vol. 95, no. 8, August
1981, page 292, no. 66690t, Columbus, Ohio,
USA**
**CHEMICAL ABSTRACTS, vol. 98, no. 6, 1983,
page 296, no. 39593u, Columbus, Ohio, USA**

(73) Proprietor: **GTE Laboratories Incorporated**
**100 W. 10th Street**
**Wilmington Delaware (US)**

(72) Inventor: **Buljan, Sergej-Tomislav**
**23 Washington Drive**
**Acton, MA 01720 (US)**
Inventor: **Sarin, Vinod K.**
**7 Diamond Road**
**Lexington, MA 02173 (US)**

(74) Representative: **Patentanwälte Grünecker, Dr.
Kinkeldey, Dr. Stockmair, Dr. Schumann, Jakob,
Dr. Bezold, Meister, Hilgers, Dr. Meyer-Plath
Maximilianstrasse 58
D-8000 München 22 (DE)**

Courier Press, Leamington Spa, England.

## Description

The present invention relates to an abrasion resistant composite cutting tool of the type as indicated in the preamble portion of claim 1. A composite ceramic cutting tool of this type is already known from EP—A—35 777.

In particular EP—A—35 777 discloses a composite cutting tool consisting of 20 to 40 volume percent of hard refractory metal carbides or nitrides, with a particle size smaller than 20 microns, distributed in a modified silicon nitride matrix, which contains 1 to 25 weight percent of a densification aid selected from yttrium oxide and hafnium oxide and which may contain up to 5 percent by weight of alumina. Said conventional composite ceramic tool is prepared by densification to form a body consisting essentially of particles of hard refractory material uniformly distributed in a matrix consisting essentially of a first phase and a second phase, said first phase consisting essentially of crystalline silicon nitride and said second phase being an intergranular refractory phase comprising silicon nitride and a suitable densification aid selected from the group consisting of yttrium oxide, zirconium oxide, hafnium oxide and the lanthanide rare earth oxide and mixtures thereof.

Said prior art process frequently results in an inhomogenous distribution of the matrix-modifying phase causing a localized variation of the matrix properties which is not desirable.

In machining short-chipping materials such as gray cast iron, for example, tool wear is controlled predominantly by abrasion wear resistance, while in the machining of long-chipping materials such as steel, resistance to chemical wear becomes more important.

It is the object of the present invention to provide an improved abrasion resistant composite cutting tool with improved performance in cutting long-chipping workpiece materials and to provide a process for making the same. In particular, the inventive improved ceramic cutting tool should show a homogenous matrix having a hard refractory material uniformly dispersed throughout said homogenous matrix.

The above object of the present invention is achieved by the subject matter of claim 1 and in particular by the characterizing features thereof. The inventive process is defined in claim 10.

Further improvements and preferred embodiments of the inventive cutting tool are indicated in subclaims 2 to 9 whereas further improvements and preferred embodiments of the inventive method are indicated in claims 11 to 17.

For a better understanding of the present invention, together with other and further objects, advantages and capabilities thereof, reference is made to the following disclosure and appended claims.

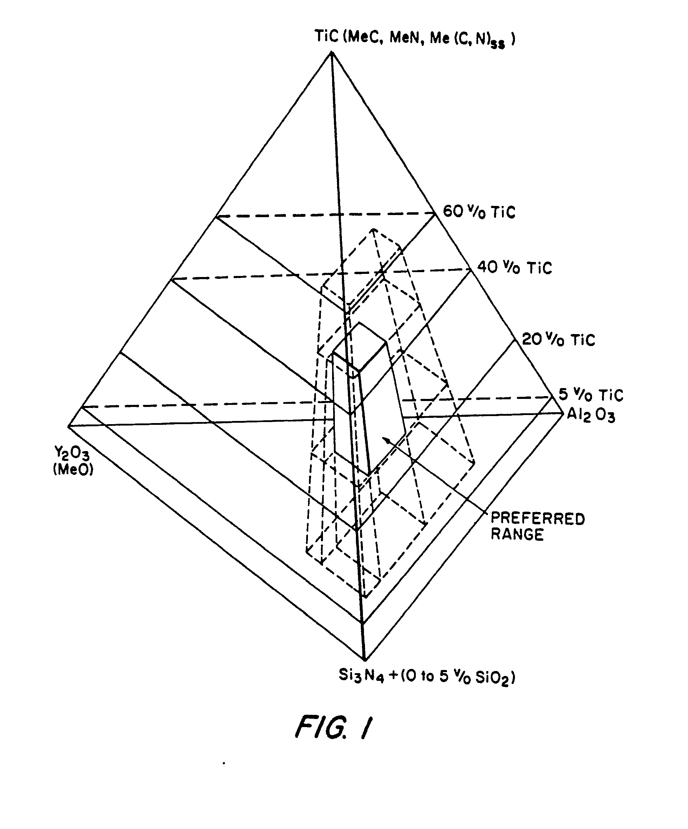

Figure 1 illustrates the range of compositions of cutting tools in accordance with the present invention in a four component diagram.

Figures 2a—2c illustrate variation in tool hardness (2a), fracture toughness (2b), and modulus of rupture (2c) with varying alumina content and refractory carbide content of articles in accordance with this invention.

Figure 3 illustrates improved wear resistance of the cutting tools fabricated in accordance with this invention over that of alumina-free tools.

Figure 4 is a graph illustrating abrasion resistance of cutting tools of the present invention compared with alumina-free and silicon nitride-free tools.

Figure 5 illustrates a wear model of the abrasion and chemical wear components of tools in accordance with the present invention.

For a better understanding of the present invention together with other and further objects, advantages and capabilities thereof, reference is made to the following disclosure and appended claims in connection with the above-described figures.

The polycrystalline bodies described herein have a composite microstructure of a modified silicon aluminum oxynitride, and a dispersed phase of refractory metal carbide, and/or nitride, and/or carbonitride and/or solid solution thereof.

The modified silicon aluminum oxynitride is formed from 2 to 25 volume percent of a modifier, from 20 to 90 volume silicon nitride, and from 5 to 60 volume percent aluminum oxide.

Many combinations of compounds can be used to obtain the modified silicon aluminum oxynitride described. For example, silicon nitride (containing up to about 5 volume percent silicon dioxide) and alumina may be employed. In that case, the alumina content is preferably in the range from about 10 to about 30 volume percent. The sintering additive or modifier is selected from the group consisting of the oxides of silicon, yttrium, hafnium, zirconium, beryllium, the lanthanides, and combinations thereof. The preferred metal oxide modifier is yttrium oxide. Silicon dioxide is a glass-forming modifier which can be present in the silicon nitride starting powder or it may be purposely introduced. Unintentional impurities present in the body tend to concentrate in an intergranular phase of the matrix and should be minimized. The modifier comprises preferably from about 5 to about 10 volume percent of the matrix. The matrix is defined as the modified silicon aluminum oxynitride.

In accordance with this invention, the refractory material comprises from 5 to 60 volume percent of the densified composite cutting tool, preferably from about 20 to about 40 volume percent. Typical hard refractory materials are the metal carbides, and/or nitrides, and/or carbonitrides and/or solid solutions thereof. Preferred hard refractory materials are the carbides, nitrides, carbonitrides and solid solutions thereof of metals selected from the group consisting of Ti, W, Hf, Nb, Ta, V, and combinations thereof.

Particularly preferred hard refractory materials are TiC, TiN, HfC, HfN, Ti(C,N) and Hf(C,N).

The average particle size of the hard refractory material, determined by surface area measurement techniques (i.e. B.E.T.), ranges from about 0.5 microns to about 20 microns for cutting tool applications, preferably from about 0.5 microns to about 5 microns.

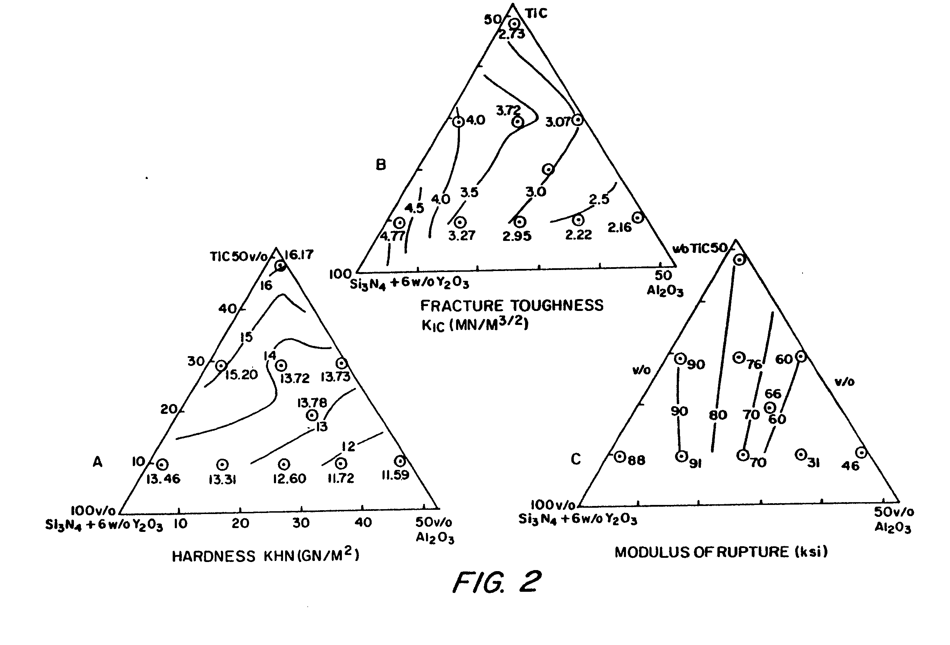

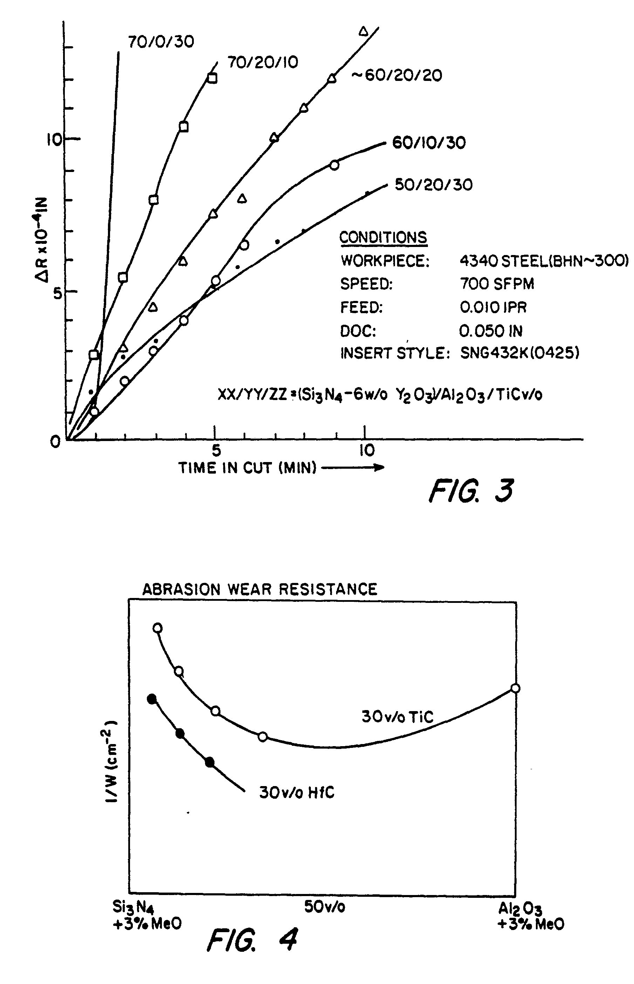

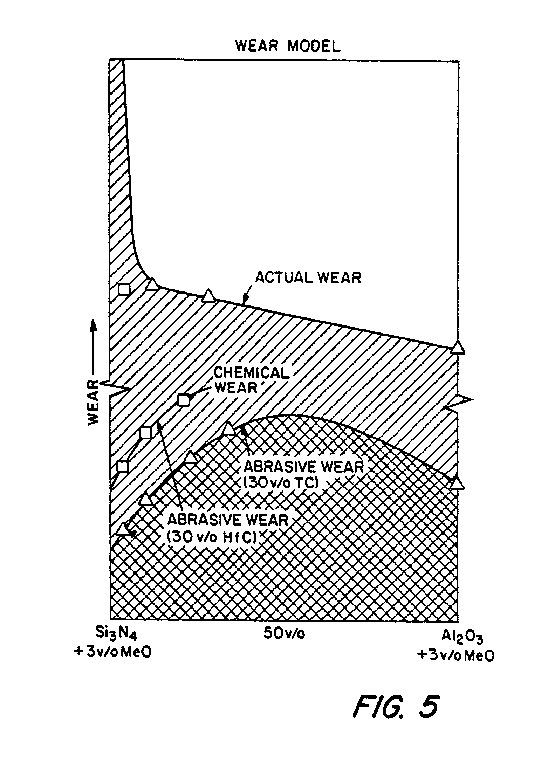

As shown in Figure 2, the hardness of the cutting tools of this invention increases with increasing hard refractory material content. In order to optimize hardness together with fracture toughness, the preferred range of hard refractory material content is from about 20 to about 40 volume percent of the composite, with the most preferred range being about 30 volume percent; Figure 4 shows volume percent titanium and 30 volume percent hafnium carbide in various matrix compositions. The resistance to chemical wear of these tools increases with increasing aluminum oxide content, as shown in Figure 5.

The cutting tools of this invention are made by compacting the above-mentioned components to a highly dense article by conventional techniques such as sintering, hot pressing, or hot isostatic pressing. Since the strength of the resulting cutting tools decreases with increasing porosity of the compact, it is important that the compact be densified to a density as closely approaching theoretical density as possible. The examples shown in Figure 2 have been consolidated to essentially full density. Improved wear resistance of cutting tools in accordance with this invention is illustrated in Figure 3.

It has been found that mechanical mixing of the powdered components of the cutting tools of this invention results in smaller or large inhomogeneities in the distribution of the modifying phase. These inhomogeneities may be of the order of 5 to 300 microns in size, resulting in undesired localized variation in properties of the matrix.

Homogeneity of the cutting tool material is an extremely important factor for tool performance. During cutting, only a small portion of the cutting tool is exposed to high stress and elevated temperatures. The temperature induced changes in mechanical properties, which are also compositionally dependent, contribute to fracture and chipping at the tool edge, in turn contributing to the rate of tool wear.

Modified silicon aluminum oxynitride based composite cutting tools of improved performance in accordance with this invention are obtained by pre-reacting a mixture of $Si_3N_4$, the metal oxide modifier, and from 5 to 60 volume percent $Al_2O_3$ in a non-oxidizing atmosphere such as nitrogen, helium, or argon, at a temperature ranging from 1400°C to 1800°C, preferably from about 1600°C to 1800°C for a period of from 1 hour to 8 hours. The pre-reacted material is mixed with from 5 to 60 volume percent of a hard refractory material selected from the carbides, nitrides, carbonitrides, and mixtures thereof of the refractory metals. The resulting mixture is comminuted by ball milling, high energy air milling, or attrition ball milling to form the initial composite blend. The composite blend is then densified to a density of at least 98% of theoretical by pressing followed by sintering, hot-pressing, gas over-pressure sintering, or hot isostatic pressing in a non-oxidizing atmosphere. Temperatures employed for pressing followed by sintering range from about 1600°C to about 1800°C, preferably from about 1700°C to about 1800°C. Hot-pressing is carried out at pressures greater than about 2000 psig (13,790 kN/M²) at temperatures ranging from about 1600°C to about 1900°C, preferably from about 1700°C to about 1900°C. Gas over-pressure sintering is carried out at pressures from about 150 to about 200 psig (about 1030 to about 1380 kN/M²) and at temperatures ranging from about 1600° to about 1950°C, preferably from about 1700°C to about 1950°C. Hot isostatic pressing is carried out at pressures ranging above 10,000 psig (68,947 kN/M²) and at temperatures ranging from 1600°C to about 1900°C, preferably from about 1700°C to about 1800°C.

The above-defined process steps improve the performance of the cutting tool because the process insures improved homogeneity of the matrix phase and uniform distribution of the hard refractory material throughout the cutting tool.

In order to fully utilize the advantages of the distributed hard refractory phase and to obtain a composite cutting tool with optimized chemical and mechanical wear resistance properties, it is preferred that the average particle size of the hard refractory material range between about 0.5 microns and about 20 microns in size, preferably between about 0.5 microns to about 5 microns.

Properties of the particulate composite cutting tool of this invention are tailored for particular applications through structural modification of the composite by control of the particle size, distribution, and concentration of the hard refractory particulate. It has been observed, for example, that the presence of coarse particles having a size greater than about 20 microns greatly increases the probability of tool chipping and catastrophic tool failure during machining. Large particles of the hard refractory material were always noted at the point of fracture origin in photomicrographs of fracture surfaces. It was also noted that room temperature and elevated temperature strengths decrease with increasing particle size of the hard refractory, although there was an improvement in fracture toughness.

Finer dispersion of the hard refractory material in the composite also improves chemical homogeneity of the cutting tool. In machining applications where chemical interaction takes place predominantly between the matrix and the workpiece material, improved chemical homogeneity of the composite decreases wear while insuring that any wear of the cutting tool is uniform.

To tailor the chemical composition of the composite tool of this invention for specific applications, the dispersed phase may be varied for certain machining conditions. Titanium carbide, hafnium carbide, titanium nitride, hafnium nitride, titanium carbonitride, and hafnium carbonitride are preferred hard refractory materials for inclusion in composite cutting tools of this invention. In those applications where it is important to minimize chemical wear, titanium nitride is preferred to titanium carbide. Additionally, titanium nitride exhibits better resistance to oxidation than titanium carbide in composite cutting tools of the invention. Combinations of titanium carbide and titanium nitride or titanium carbonitride itself have been found to be preferable under certain machining conditions to optimize mechanical and overall machining properties.

The following examples are provided to enable one skilled in the art to practice the invention. These examples, however are to be viewed merely as illustrative of the present invention and should not be viewed as limiting the scope of the invention as defined by the appended claims.

Example 1

To 41.7 weight percent silicon nitride powder were added 32.85 weight percent alumina powder, 4.02 weight percent yttria powder, and 21.43 weight percent titanium carbide powder. About 2.5 parts by weight toluene, 0.1 parts by weight methanol, and 0.05 parts by weight stearic acid were added to the powder mixture. The resulting slurry was thoroughly mixed by ball milling and then dried at 75°C. The dry mixture was then ball milled for about 24 hours. The resulting mixture was mixed with about 0.05 parts by weight of a copolymer of ethylene glycol and methoxyethylene glycol, 1 part by weight toluene, and about 0.05 parts by weight methanol. This mixture was mixed by ball milling for about 15 minutes after which the slurry was dried at 75°C and screened through a 60 mesh* screen. The −60 mesh* fraction was pressed at about 25,000 psig (172,370 kN/M²) to obtain a green compact. The green compact was then sintered to a hard, densified product by heating to a temperature of 1750°C in argon for 1.5 hours.

Example 2

The method of Example 2 was employed to produce a composite cutting tool substrate body by employing 23.60 weight percent titanium nitride as the hard refractory material in place of the titanium carbide of Example 2.

Example 3

The method of Example 2 was employed to produce a composite cutting tool substrate body by employing 55.07 weight percent hafnium carbide as the hard refractory material in place of the titanium carbide of Example 2.

Example 4

To 41.7 weight percent silicon nitride and about 32.85 weight percent alumina powder were added about 4.02 weight percent yttrium oxide powder.

The resulting mixture was thoroughly mixed by ball milling and then prereacted by heating at about 1725°C for a period of about 5 hours in a nitrogen atmosphere to produce prereacted modified silicon aluminum oxynitride. To 0.70 parts by volume of the prereacted powder mixture were added about 0.30 parts by volume of titanium carbide powder. To the resulting powder mixture were added about 2.5 parts by weight toluene, about 0.1 parts by weight methanol, and about 0.05 parts by weight stearic acid. The resulting slurry was thoroughly mixed by ball milling and then dried at 75°C. The resulting dry mixture was ball milled for about 24 hours to uniformly distribute the titanium carbide throughout the prereacted modified silicon aluminum oxynitride. The resulting blend was mixed with about 0.05 parts by weight of a copolymer of ethylene glycol and methoxyethylene glycol, about 1 part by weight of toluene, and about 0.05 parts by weight of methanol. The resulting slurry was mixed by ball milling for about 30 minutes, dried at 75°C, and then screened through a 60 mesh* screen. The −60 mesh* fraction was pressed at about 25,000 psig (172,370 kN/M²) to obtain a green compact which was thereafter sintered to a hard, highly densified body by heating at 1750°C in argon.

Example 5

A hard, highly densified cutting tool substrate body was produced by the general method outlined in Example 4; however densification of the −60 mesh* powder mixture was effected by pressing the powder at a pressure of about 3000 psig (20,680 kN/M²) at a temperature of about 1700°C in argon.

Example 6

The method of Example 4 was employed to produce a composite cutting tool substrate body by employing titanium nitride in place of the titanium carbide of Example 4 and by carrying out the sintering step in nitrogen at a temperature of about 1750°C.

Example 7

TO 41.7 w/o of $Si_3N_4$, which can contain from 0 to about 5 v/o $SiO_2$, add about 32.85 w/o $Al_2O_3$ powder and 4.02 w/o $Y_2O_3$. The resulting mixture is thoroughly mixed by dry ball milling, then heat treated at 1725°C for 5 hours in a nitrogen atmosphere to produce a pre-reacted modified silicon aluminum oxynitride. To 0.70 parts by volume of the pre-reacted modified silicon aluminum oxynitride add 0.30 parts by volume of TiC powder. To the powder mixture of TiC and pre-reacted modified silicon aluminum oxynitride add about 2.5 parts by weight toluene, about 0.1 parts by weight methanol, and about 0.05 parts by weight stearic acid. The resulting slurry is thoroughly mixed by ball milling and then dried at

_____

*U.S. Sieve Series 75°C. The resulting dry mixture is ball milled for about 24 hours to obtain a uniformly distributed TiC throughout the pre-reacted modified silicon aluminum oxynitride. This ball milled mixture is blended with about 0.05 parts by weight polyethylene glycol-methoxypolyethylene glycol copolymer, 1 part by weight toluene and about 0.05 parts by weight methanol. This mixture is ball milled for about 30 minutes, dried at 75°C and then screened through a 60 mesh* screen. The minus 60 mesh* fraction is pressed at about 25,000 psig (173,370 kN/M²) to obtain a green compact. The residual solvents and binders in the green compact are removed by heating at 600°C in an inert atmosphere. The green compact is then sintered to a hard, highly densified product by heating to temperatures of 1700°C to 1850°C in argon, for 1 1/2 hours.

Example 8

To 41.7 w/o of $Si_3N_4$ add about 32.85 w/o $Al_2O_3$ powder and 4.02 w/o $Y_2O_3$. The resulting mixture is thoroughly mixed by dry ball milling, then heat treated at 1725°C for 5 hours in a nitrogen atmosphere to produce a pre-reacted modified silicon aluminum oxynitride. To 0.70 parts by volume of the pre-reacted modified silicon aluminum oxynitride add 0.30 parts by volume of TiC powder. To the powder mixture of TiC and pre-reacted silicon aluminum oxynitride add about 2.5 parts by weight toluene, about 0.1 parts by weight methanol. The resulting slurry is thoroughly mixed by ball milling and then dried at 75°C. The dry mixture is ball milled for about 24 hours and then screened through a 60 mesh screen. The minus 60 mesh* fraction is pressed at about 3000 psig (20,680 kN/M²) at a temperature of about 1700°C in argon to produce a hard, highly densified product.

While there has been shown and described what is at present considered the preferred embodiment of the invention, it will be obvious to those skilled in the art that various changes and modifications may be made therein without departing from the scope of the invention as defined by the appended claims.

**Claims**

1. An abrasion resistant composite cutting tool consisting essentially of a particulate material selected from the group consisting of the refractory metal carbides, nitrides, carbonitrides and mixtures thereof uniformly distributed in a matrix comprising a modified silicon aluminum oxynitride, said particulate material comprising from about 5 volume percent to about 60 volume percent of said cutting tool and having an average particle size of between about 0.5 microns and about 20 microns; said modified silicon aluminum oxynitride having a modifier selected from the group consisting of the oxides of silicon,

*U.S. Sieve Series yttrium, magnesium, hafnium, zirconium, beryllium, the lanthanides and combinations thereof, characterized in that said modified silicon aluminum oxynitride is formed from 2 to 25 volume percent of said modifier, from 20 to 90 volume percent silicon nitride, and from 5 to 60 volume percent aluminum oxide.

2. An abrasion resistant composite cutting tool in accordance with claim 1 wherein the average particle size of said particulate material ranges between 0.5 and 5 microns (μm).

3. An abrasion resistant composite cutting tool in accordance with claim 1 wherein said particulate material comprises from 20 to 40 volume percent of said cutting tool.

4. An abrasion resistant composite cutting tool in accordance with claim 1 wherein said modifier comprises from 2 to 10 volume percent of said modified silicon aluminum oxynitride.

5. An abrasion resistant composite cutting tool in accordance with claim 1 wherein said particulate material is selected from the group consisting of the carbides of titanium, tungsten, hafnium, niobium, tantalum, vanadium, and combinations thereof.

6. An abrasion resistant composite cutting tool in accordance with claim 1 wherein said particulate material is selected from the group consisting of titanium nitride and hafnium nitride.

7. An abrasion resistant composite cutting tool in accordance with claim 1 wherein said particulate material is selected from the group consisting of titanium carbonitride, hafnium carbonitride, and combinations thereof.

8. An abrasion resistant composite cutting tool in accordance with claim 1 wherein said particulate material is titanium carbide.

9. An abrasion resistant composite cutting tool in accordance with claim 1 wherein said modifier is yttrium oxide.

10. A process for obtaining an abrasion resistant cutting tool having a hard refractory material distributed in a homogenous matrix containing a modified silicon aluminum oxynitride comprising mixing silicon nitride, aluminum oxide and a modifier to form a starting mixture, treating said mixture to form a composite blend and densifying said composite blend to form a homogeneous matrix having a dispersed face of said hard refractory material throughout said homogenous matrix, said densifying being sufficient to obtain a density greater than 98 percent of theoretical density, characterized by mixing from 20 to 90 volume percent silicon nitride, from 5 to 60 volume percent aluminum oxide and from 2 to 25 volume percent of a modifier to form a mixture; reacting said mixture at a temperature from 1400°C to 1800°C for a period of time from 1 to 8 hours in a non-oxidizing atmosphere to form a reacted mixture; comminuting a blend comprising from 40 to 95 percent of said reacted mixture and from 5 to 60 volume percent of a hard refractory material to form a composite blend; and densifying said composite blend.

11. A process according to claim 10 wherein said modifier is an oxide selected from the group consisting of Si, Y, Hf, Ce, Zr, Mg, Be, the lanthanides, and combinations thereof.

12. A process according to claim 10 wherein said hard refractory material is selected from the group consisting of TiC, TiN, Ti(C,N), HfC, HfN, Hf(C,N), WC, W(C,N), VC, VN, V(C,N), TaC, TaN, Ta(C,N), and combinations thereof.

13. A process according to claim 10 wherein said hard refractory material is a carbide selected from the group consisting of TiC, HfC, WC, VC, TaC, and combinations thereof.

14. A process according to claim 10 wherein said hard refractory material is a nitride selected from the group consisting of TiN, HfN, and combinations thereof.

15. A process according to claim 10 wherein said hard refractory material is a carbonitride selected from the group consisting of Ti(C,N), Hf(C,N) and combinations thereof.

16. A process according to claim 10 wherein the hard refractory particles are selected from the refractory metal carbides, nitrides and carbonitrides, said hard refractory particles being smaller than 20 microns (μm) and wherein said mixture is heated to a temperature from 1600°C to 1800°C.

17. A process according to claim 10 wherein said non-oxidizing atmosphere is a gas selected from the group consisting of nitrogen, helium, argon, and combinations thereof.

18. A process according to claim 10 wherein said densifying comprises:
    pressing said composite blend to form a composite body; and
    sintering said composite body at a sintering temperature from about 1600°C to about 1800°C in an inert gas atmosphere to form a homogeneous matrix of said reacted mixture having a dispersed phase of said hard refractory material throughout said homogeneous matrix, said densifying being sufficient to obtain a density greater than 98 percent of theoretical density of said composite blend.

19. A process according to claim 18 wherein:
    said sintering temperature is from about 1700°C to about 1800°C.

20. A process according to claim 18 wherein:
    said inert gas atmosphere is a gas selected from the group consisting of nitrogen, argon, and combinations thereof.

21. A process according to claim 10 wherein said densifying comprises:
    hot-pressing said composite blend at a pressure greater than 2000 psig (13,790 kN/M$^2$) and a temperature from about 1600°C to about 1900°C in an inert gas atmosphere to form a homogeneous matrix of said reacted mixture having a dispersed phase of said hard refractory material throughout said homogeneous matrix, said densifying being sufficient to obtain a density greater than 98 percent of theoretical density of said composite blend.

22. A process according to claim 21 wherein:
    said temperature of said hot-pressing is from about 1700°C to about 1900°C.

23. A process according to claim 21 wherein:
    said inert gas atmosphere is a gas selected from the group consisting of nitrogen, argon, and combinations thereof.

24. A process according to claim 10 wherein said densifying comprises:
    gas overpressure sintering at a gas overpressure from about 150 psig to about 200 psig (about 1,030 to about 1,380 kN/M$^2$) and a temperature from about 1600°C to about 1950°C in an inert gas atmosphere to form a homogeneous matrix of said reacted mixture having a dispersed phase of said hard refractory material throughout said homogeneous matrix, said densifying being sufficient to obtain a density greater than 98 percent of theoretical density of said composite blend.

25. A process according to claim 24 wherein:
    said temperature of said gas overpressure sintering is from about 1700°C to about 1950°C.

26. A process according to claim 24 wherein:
    said inert gas atmosphere is a gas selected from the group consisting of nitrogen, argon, and combinations thereof.

27. A process according to claim 10 wherein said densifying comprises:
    hot-isostatic pressing at a pressure greater than 10,000 psig (68,947 kN/M$^2$) and a temperature from about 1600°C to about 1900°C in an inert gas atmosphere to form a homogeneous matrix of said reacted mixture having a dispersed phase of said hard refractory material throughout said homogeneous matrix, said densifying being sufficient to obtain a density greater than 98 percent of theoretical density of said composite blend.

28. A process according to claim 27 wherein:
    said temperature of said hot-isostatic pressing is from about 1700°C to about 1800°C.

29. A process according to claim 27 wherein:
    said inert gas atmosphere is a gas selected from the group consisting of nitrogen, argon, and combinations thereof.

**Patentansprüche**

1. Abriebfestes Verbund-Schneidwerkzeug, welches im wesentlichen aus einem Partikelmaterial besteht, gewählt aus der Gruppe, bestehend aus den feuerfesten Metallcarbiden, -nitriden, -carbonitriden und Mischungen daraus, gleichmäßig verteilt in einer Matrix, welche ein modifiziertes Siliciumaluminiumoxynitrid. umfaßt, wobei das Partikelmaterial etwa 5 Vol.-% bis etwa 60 Vol.-% des Schneidwerkzeugs umfaßt und eine durchschnittliche Teilchengröße von etwa 0,5 Mikron bis etwa 20 Mikron besitzt, wobei das modifizierte Siliciumaluminiumoxynitrid ein Modifiziermittel enthält, gewählt aus der Gruppe, bestehend aus den Oxiden von Silicium, Yttrium, Magnesium, Hafnium, Zirkonium, Beryllium, den Lanthaniden und Kombinationen daraus, dadurch gekennzeichnet, daß das modifizierte Siliciumaluminiumoxynitride aus 2 bis 25 Vol.-% des Modifiziermittels, 20 bis 90 Vol.-% Siliciumnitrid und 5 bis 60 Vol.-% Aluminiumoxid gebildet wird.

2. Abriebfestes Verbund-Schneidwerkzeug nach Anspruch 1, worin die mittlere Teilchengröße des Partikelmaterials zwischen 0,5 und 5 Mikron ($\mu$m) liegt.

3. Abriebfestes Verbund-Schneidwerkzeug nach Anspruch 1, worin das Partikelmaterial 20 bis 40 Vol.-% des Schneidwerkzeugs umfaßt.

4. Abriebfestes Verbund-Schneidwerkzeug nach Anspruch 1, worin das Modifiziermittel 2 bis 10 Vol.-% des modifizierten Siliciumaluminiumoxynitrids umfaßt.

5. Abriebfestes Verbund-Schneidwerkzeug nach Anspruch 1, worin das Partikelmaterial aus der Gruppe, bestehend aus den Carbiden von Titan, Wolfram, Hafnium, Niob, Tantal, Vanadium und Kombinationen daraus, gewählt wird.

6. Abriebfestes Verbund-Schneidwerkzeug nach Anspruch 1, worin das Partikelmaterial aus der Gruppe, bestehend aus Titannitrid und Hafniumnitrid, gewählt wird.

7. Abriebfestes Verbund-Schneidwerkzeug nach Anspruch 1, worin das Partikelmaterial aus der Gruppe, bestehend aus Titancarbonitrid, Hafniumcarbonitrid und Kombinationen daraus, gewählt wird.

8. Abriebfestes Verbund-Schneidwerkzeug nach Anspruch 1, worin das Partikelmaterial Titancarbid ist.

9. Abriebfestes Verbund-Schneidwerkzeug nach Anspruch 1, worin das Modifiziermittel Yttriumoxid ist.

10. Verfahren zur Herstellung eines abriebfesten Schneidwerkzeugs aus einem harten, feuerfesten Material, verteilt in einer homogenen Matrix, die ein modifiziertes Siliciumaluminiumoxynitrid enthält, welches das Mischen von Siliciumnitride, Aluminiumoxyd und einem Modifiziermittel zur Bildung eines Ausgangsmaterials, das Behandeln der Mischung zur Bildung einer Verbundmischung und das Verdichten der Verbundmischung zur Bildung einer homogenen Matrix mit einer dispergierten Phase harten, feuerfesten Materials durch die homogene Matrix umfaßt, wobei das Verdichten ausreichend ist, um eine Dichte von mehr als 98% der theoretischen Dichte zu erhalten, gekennzeichnet, durch

— Mischen von 20 bis 90 Vol.-% Siliciumnitrid, 5 bis 60 Vol.-% Aluminiumoxid und 2 bis 25 Vol.-% eines Modifiziermittels zur Bildung einer Mischung;
— Umsetzen der Mischung bei einer Temperatur von 1 400°C bis 1 800°C über einen Zeitraum von 1 bis 8 Stunden in einer nichtoxidierenden Atmosphäre zur Bildung einer umgesetzten Mischung;
— Zerkleinern einer Mischung, umfassend 40 bis 95% der umgesetzten Mischung und 5 bis 60 Vol.-% eines harten, feuerfesten Materials zur Bildung einer Verbundmischung; und
— Verdichten der Verbundmischung.

11. Verfahren nach Anspruch 10, worin das Modifiziermittel ein Oxid, gewählt aus der Gruppe, bestehend aus Si, Y, Hf, Ce, Zr, Mg, Be, den Lathaniden und Kombinationen daraus, ist.

12. Verfahren nach Anspruch 10, worin das harte, feuerfeste Material aus der Gruppe, bestehend aus TiC, TiN, Ti(C,N), HfC, HfN, Hf(C,N), WC, W(C,N), VC, VN, V(C,N), TaC, TaN, Ta(C,N) und Kombinationen daraus, gewählt wird.

13. Verfahren nach Anspruch 10, worin das harte, feuerfeste Material ein Carbid, gewählt aus der Gruppe, bestehend aus TiC, HfC, WC, VC, TaC und Kombinationen daraus, ist.

14. Verfahren nach Anspruch 10, worin das harte, feuerfeste Material ein Nitrid, gewählt aus der Gruppe, bestehend aus TiN, HfN und Kombinationen daraus, ist.

15. Verfahren nach Anspruch 10, worin das harte, feuerfeste Material ein Carbonitrid, gewählt aus der Gruppe, bestehend aus Ti(C,N), Hf(C,N) und Kombinationen daraus, ist.

16. Verfahren nach Anspruch 10, worin die harten, feuerfesten Teilchen aus den feuerfesten Metallcarbiden, -nitriden und -carbonitriden gewählt werden, wobei die harten, feuerfesten Teilchen kleiner als 20 Mikron ($\mu$m) sind und worin die Mischung auf eine Temperatur von 1 600°C bis 1 800°C erwärmt wird.

17. Verfahren nach Anspruch 10, worin die nichtoxidierende Atmosphäre ein Gas, gewählt aus der Gruppe, bestehend aus Stickstoff, Helium, Argon und Kombinationen daraus, ist.

18. Verfahren nach Anspruch 10, worin das Verdichten umfaßt:

— Pressen der Verbundmischung zur Bildung eines Verbundkörpers, und
— Sintern des Verbundkörpers bei einer Sintertemperatur von etwa 1 600°C bis etwa 1 800°C in einer inerten Gasatmosphäre zur Bildung einer homogenen Matrix der umgesetzten Mischung mit einer dispergierten Phase des harten, feuerfesten Materials durch die homogene Matrix, wobei das Verdichten ausreichend ist, um eine Dichte von mehr als 98% der theoretischen Dichte der Verbundmischung zu erhalten.

19. Verfahren nach Anspruch 18, worin die Sintertemperatur etwa 1 700°C bis etwa 1 800°C beträgt.

20. Verfahren nach Anspruch 18, worin die inerte Gasatmosphäre ein Gas, gewählt aus der Gruppe, bestehend aus Stickstoff, Argon und Kombinationen daraus, ist.

21. Verfahren nach Anspruch 10, worin das Verdichten umfaßt:

Warmpressen der Verbundmischung bei einem Druck von mehr als 2 000 psig (13 790 kN/m²) und einer Temperatur von etwa 1 600°C bis etwa 1 900°C in einer inerten Gasatmosphäre zur Bildung einer homogenen Matrix der umgesetzten Mischung mit einer dispergierten Phase des harten, feuerfesten Materials durch die homogene Mischung, wobei das Verdichten ausreichend ist, um eine Dichte von mehr als 98% der theoretischen Dichte der Verbundmischung zu erhalten.

22. Verfahren nach Anspruch 21, worin die Temperatur des Warmpressens etwa 1 700°C bis etwa 1 900°C beträgt.

23. Verfahren nach Anspruch 21, worin die inerte Gasatmosphäre ein Gas, gewählt aus der Gruppe, bestehend aus Stickstoff, Argon und Kombinationen daraus, ist.

24. Verfahren nach Anspruch 10, worin das Verdichten umfaßt:

Gasüberdrucksintern bei einem Gasüberdruck von etwa 150 psig bis etwa 200 psig (etwa 1 030 bis etwa 1 380 kN/m²) und einer Temperatur von etwa 1 600°C bis etwa 1 950°C in einer inerten Gasatmosphäre zur Bildung einer homogenen Matrix der umgesetzten Mischung mit einer dispergierten Phase des harten, feuerfesten Materials durch die homogene Matrix, wobei das Verdichten ausreichend ist, um eine Dichte von mehr als 98% der theoretischen Dichte der Verbundmischung zu erhalten.

25. Verfahren nach Anspruch 24, worin die Temperatur des Gasüberdrucksinterns etwa 1 700°C bis etwa 1 950°C beträgt.

26. Verfahren nach Anspruch 24, worin die inerte Gasatmosphäre ein Gas, gewählt aus der Gruppe, bestehend aus Stickstoff, Argon und Kombinationen daraus, ist.

27. Verfahren nach Anspruch 10, worin das Verdichten umfaßt:

Isostatisches Warmpressen bei einem Druck von mehr als 10 000 psig (68 947 kN/m²) und einer Temperatur von etwa 1 600°C bis etwa 1 900°C in einer inerten Gasatmosphäre zur Bildung einer homogenen Matrix der umgesetzten Mischung mit einer dispergierten Phase des harten, feuerfesten Materials durch die homogene Matrix, wobei das Verdichten ausreichend ist, um eine Dichte von mehr als 98% der theoretischen Dichte der Verbundmischung zu erhalten.

28. Verfahren nach Anspruch 27, worin die Temperatur des isostatischen Warmpressens etwa 1 700°C bis etwa 1 800°C beträgt.

29. Verfahren nach Anspruch 27, worin die inerte Gasatmosphäre ein Gas, gewählt aus der Gruppe, bestehend aus Stickstoff, Argon und Kombinationen daraus, ist.

**Revendications**

1. Outil de coupe composite résistant à l'abrasion consistant essentiellement et un matériau particulaire choisi dans le groupe comprenant les carbures, les nitrures, les carbonitrures d'un métal réfractaire et des mélanges de ceux-ci uniformément distribués dans une matrice comprenent un oxynitrure d'aluminium silicium modifié, le dit matériau particulaire constituant entre 5 et 60% environ en volume du dit outil de coupe et présentant des particules d'une taille moyenne comprise entre 0,5 et 20 µm environ, le dit oxynitrure d'aluminium silicium modifié comportant un modificateur choisi dans le groupe comprenant les oxydes de silicium, d'yttrium, de magnésium, d'hafnium, de zirconium, de béryllium, les lanthanides et des mélanges de ceux-ci, caractérisé en ce que le dit oxynitrure d'aluminium silicium modifié est composé de, en volume, entre 2 et 25% du dit modificateur, entre 20 et 90% de nitrure de silicium, et entre 5 et 60% d'oyxde d'aluminium.

2. Outil de coupe composite résistant à l'abrasion selon la revendication 1 caractérisé en ce que la taille moyenne des particules du dit matériau particulaire est comprise entre 0,5 et 5 µm.

3. Outil de coupe composite résistant à l'abrasion selon la revendication 1 caractérisé en ce que le dit matériau particulaire constitute entre 20 et 40% en volume du dit outil de coupe.

4. Outil de coupe composite résistant à l'abrasion selon la revendication 1 caractérisé en ce que le dit modificateur constitue entre 2 et 10% en volume du dit oxynitrure d'aluminium silicium modifié.

5. Outil de coupe composite résistant à l'abrasion selon la revendication 1 caractérisé en ce que le dit matériau particulaire est choisi dans le groupe comprenant les carbures de titane, de tungstène, d'hafnium, de niobium, de tantale, de vanadium, et des mélanges de ceux-ci.

6. Outil de coupe composite résistant à l'abrasion selon la revendication 1, caractérisé en ce que le dit matériau particulaire est choisi dans le groupe comprenant le nitrure de titane et le nitrure d'hafnium.

7. Outil de coupe composite résistant à l'abrasion selon la revendication 1 caractérisé en ce que le dit matériau particulaire est choisi dans le groupe comprenant le carbonitrure de titane, le carbonitrure d'hafnium, et des mélanges de ceux-ci.

8. Outil de coupe composite résistant à l'abrasion selon la revendication 1 caractérisé en ce que le dit matériau particulaire est du carbure de titane.

9. Outil de coupe composite résistant à l'abrasion selon la revendication 1 caractérisé en ce que le dit modificateur est de l'oxyde d'yttrium.

10. Procédé pour obtenir un outil de coupé résistant à l'abrasion comprenant un matériau réfractaire dur distribué dans une matrice homogène contenant un oxynitrure d'aluminium silicium modifié comprenant un nitrure de silicium, un oxyde d'aluminium et un modificateur pour constituer un mélange initial, traitement du dit mélange pour constituer un mélange composite et densification du dit mélange composite pour former une matrice homogène présentant une phase dispersée du dit matériau réfractaire dur dans la dite matrice homogène, la dite densification étant suffisante pour obtenir une densité supérieure à 98% de la densité théorique, caractérisé en ce que

— l'on mélange entre 20 et 90% en volume de nitrure de silicium, entre 5 et 60% en volume d'oxyde d'aluminium et entre 2 et 25% en volume d'un modificateur pour obtenir un mélange;
— l'on fait réagir le dit mélange à une température comprise entre 1400 et 1800°C pendant un temps compris entre 1 et 8 heures en atmosphère non-oxydante pour constituer un mélange ayant réagi;
— l'on pulvérise un mélange comprenant entre 40 et 95% du dit mélange ayant réagi et entre 5 et 60% en volume d'un matériau réfractaire dur pour constituer un mélange composite; et
— l'on densifie le dit mélange composite.

11. Procédé selon la revendication 10 caractérisé en ce que le dit modificateur est un oxyde choisi dans le groupe comprenant le silicium, l'yttrium, l'hafnium, le césium, le zirconium, le manganèse, le bérium, les lanthanides et des mélanges de ceux-ci.

12. Procédé selon la revendication 10 caractérisé en ce que le matériau réfractaire dur est choisi dans le groupe comprenant TiC, TiN, Ti(C,N), HfC, HfN, Hf(C,N), WC, W(C,N), VC, VN, V(C,N), TaC, TaN, Ta(C,N) et des mélanges de ceux-ci.

13. Procédé selon la revendication 10 caractérisé en ce que le dit matériau réfractaire est un carbure choisi dans le groupe comprenant TiC, HfC, WC, VC, TaC, et des mélanges de ceux-ci.

14. Procédé selon la revendication 10 caractérisé en ce que le matériau réfractaire dur est un nitrure choisi dans le groupe comprenant TiN, HfN, et des mélanges de ceux-ci.

15. Procédé selon la revendication 10 caractérisé en ce que le dit matériau réfractaire dur est un carbonitrure choisi dans le groupe comprenant Ti(C,N), Hf(C,N), et des mélanges de ceux-ci.

16. Procédé Selon la revendication 10 caractérisé en ce que les particules du matériau réfractaire dur sont choisies dans le groupe comprenant les carbures, les nitrures et les carbonitrures métalliques réfractaires, la taille des dites particules réfractaires dures étant inférieure à 20 μm, et que le dit mélange est chauffé à une température comprise entre 16 et 1800°C.

17. Procédé selon la revendication 10 caractérisé en ce que la dite atmosphère non-oxydante est un gaz choisi dans le groupe comprenant l'azote, l'hélium, l'argon, et des mélanges de ceux-ci.

18. Procédé selon la revendication 10 caractérisé en ce que la dite densification est effectuée:

— en pressant le dit mélange composite pour constituer un corps composite; et
— en frittant le dit corps composite à une température de frittage comprise entre 1600 et 1800°C environ dans un gas inerte pour obtenir une matrice homogène du dit mélange ayant réagit présentant une phase dispersée du dit matériau réfractaire dur à travers la dite matrice homogène,

la dite densification étant suffisant pour atteindre une densité supérieure à 98% de la densité théorique du dit mélange composite.

19. Procédé selon la revendication 18 caractérisé en ce que la dite température de frittage est comprise entre 1700 et 1800°C.

20. Procédé selon la revendication 18 caractérisé en ce que le dit gaz inerte est un gaz choisi dans le groupe comprenant l'azote, l'argon, et des mélanges de ceux-ci.

21. Procédé selon la revendication 10 caractérisé en ce que la dite densification comprend une étape de pressage à chaud du dit mélange composite sous une pression supérieure à 13 790 kN/m² à une température comprise entre 1600 et 1900°C dans un gaz inerte pour constituer une matrice homogène du dit mélange ayant réagi présentant une phase dispersée du dit matériau réfractaire dur à travers la dite matrice homogène, la dite densification étant suffisant pour atteindre une densité supérieure à 98% de la densité théorique du dit mélange composite.

22. Procédé selon la revendication 21 caractérisé en ce que la dite température du dit pressage à chaud est comprise entre 1700 et 1900°C environ.

23. Procédé selon la revendication 21 caractérisé en ce que le dit gaz inerte est un gaz choisi dans le groupe comprenant l'azote, l'argon, et des mélanges de ceux-ci.

24. Procédé selon la revendication 10 caractérisé en ce que la dite densification comprend une étape de frittage sous gaz surpressé sous une pression comprise entre 1030 et 1380 kN/m² environ et une température comprise entre 1600 et 1950°C environ dans un gaz inerte pour obtenir une matrice homogène du dit mélange ayant réagi présentant une phase dispersée du dit matériau réfractaire dur à travers la dite matrice homogène, la dite densification étant suffisante pour atteindre une densité supérieure à 98% de la densité théorique du dit mélange composite.

25. Procédé selon la revendication 25 caractérisé en ce que la dite température du dit frittage sous gaz surpressé est comprise entre 1700 et 1950°C environ.

26. Procédé selon la revendication 24 caractérisé en ce que le dit gaz inerte est un gaz choisi dans le groupe comprenant l'azote, l'argon, et des mélanges de ceux-ci.

27. Procédé selon la revendication 10 caractérisé en ce que la dite densification comprend und étape de pressage isostatique à chaud sous une pression supérieure à 68 947 kN/m² et une température comprise entre 1600 et 1900°C environ dans un gaz inerte pour obtenir une matrice homogène du dit mélange ayant réagi présentant une phase dispersée du dit matériau réfractaire dur à travers la dite matrice homogène, la dite densification étant suffisante pour atteindre une densité supérieure à 98% de la densité théorique du dit mélange composite.

28. Procédé selon la revendication 27 caractérisé en ce que la dite température de pressage isostatique à chaud est comprise entre 1700 et 1800°C environ.

29. Procédé selon la revendication 27 caractérisé en ce que le dit gas inerte est un gaz choisi dans le groupe comprenant l'azote, l'argon, et des mélanges de ceux-ci.

0 095 129

FIG. 1

FIG. 2

**A** — HARDNESS KHN(GN/M²)

**B** — FRACTURE TOUGHNESS K$_{IC}$ (MN/M$^{3/2}$)

**C** — MODULUS OF RUPTURE (ksi)

FIG. 3

CONDITIONS

| | |
|---|---|
| WORKPIECE: | 4340 STEEL(BHN~300) |
| SPEED: | 700 SFPM |
| FEED: | 0.010 IPR |
| DOC: | 0.050 IN |
| INSERT STYLE: | SNG432K(0425) |

$XX/YY/ZZ = (Si_3N_4-6w/o \; Y_2O_3)/Al_2O_3/TiC \, v/o$

ABRASION WEAR RESISTANCE

FIG. 4

3

WEAR MODEL

FIG. 5